# EUROPEAN PATENT APPLICATION

(11) **EP 1 713 209 A1**
(43) Date of publication of application: **18.10.2006**
(21) Application number: 06112666.0
(22) Date of filing: 13.04.2006
(51) Int. Cl.: H04L 12/28

(54) **Method and apparatus for efficiently transmitting frame in wireless mesh network**

(30) Priority: 15.04.2005 KR 2005031414
(71) Applicant: SAMSUNG ELECTRONICS CO., LTD., Suwon-si, Gyeonggi-do 442-742 (KR)
(72) Inventor: Cho, Song-yean, Dongjak-gu Seoul (KR); Kim, Min-soo, Seoul (KR); Kong, Ji-young, Seoul (KR); Kim, Hyeong-seok, Bundang-gu, Seonnam-si Gyeonggi-do (KR)
(74) Representative: Robinson, Ian Michael

(57) **Abstract**

A frame transmitting method, including obtaining an address of a mobile node (26) that coordinates communications of a wireless local area network (LAN) in which a mobile station (207) is located using an address of the mobile station (207), and transmitting a frame destined to the mobile station (207) over a network of mobile nodes (21-26) including the mobile node (26) using the obtained address of the mobile node (26).

## Description

The present invention relates to a mechanism capable of supporting data transmission when an access point, acting as a mobile node, is wirelessly connected to a network.

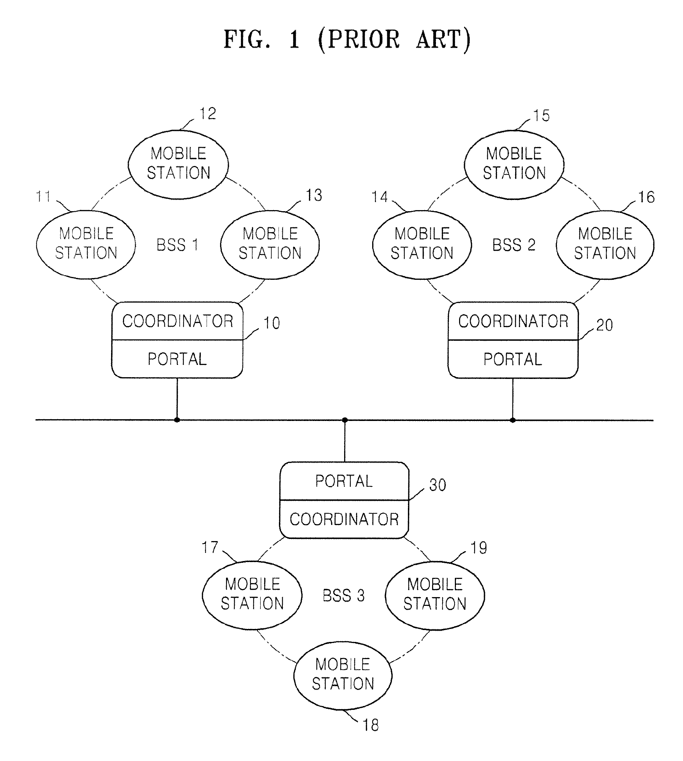

Figure 1 illustrates a conventional wireless communication environment. As shown in Figure 1, the wireless communication environment includes access points 10, 20, and 30 and mobile stations 11 through 19. The mobile stations 11 through 13 are connected to the access point 10 to form a basic service set (BSS1), the mobile stations 14 through 16 are connected to the access point 20 to form another BSS (BSS2), and the mobile stations 17 through 19 are connected to the access point 30 to form still another BSS (BSS3).

According to the IEEE 802.11 wireless local area network (WLAN) standard, a BSS refers to a set of mobile stations in an area where they communicate with one another. Due to the uncertainty of transmission distances of signals output from mobile stations, a BSS does not necessarily indicate a specific area. According to the IEEE 802.11 wireless LAN standard, a set of BSSs is referred to as an extended service set (ESS).

Each of the access points 10, 20, and 30 includes a portable module and a coordinator module. When each of the access points 10, 20, and 30 receives a wireless LAN frame from mobile stations within a coordinated BSS thereof, if a destination mobile station of the wireless LAN frame is located within the BSS, a coordinator module thereof transmits the wireless LAN frame to the destination mobile station. However, if the destination mobile station of the wireless LAN frame is located in another BSS that is coordinated by another access point, each of the access points 10, 20, and 30 transmits the wireless LAN frame to the destination mobile station through a portable module thereof. To this end, each of the access points 10, 20, and 30 transmits the wireless LAN frame to the portable module. The portable module converts the format of the wireless LAN frame into another format that is suitable for the BSS including the destination mobile station.

However, the prior art considers data transmission only for a case where access points coordinating communications of the BSSs are connected as static nodes with one another in a wired network such as 10base-T or Ethernet. As a result, a mechanism capable of supporting data transmission for a case where the access points are connected as mobile nodes with one another in a wireless manner is required.

According to the present invention there is provided an apparatus and method as set forth in the appended claims. Preferred features of the invention will be apparent from the dependent claims, and the description which follows.

An aspect of the present invention provides a method and apparatus for a mechanism capable of supporting data transmission when access points are connected wirelessly as mobile nodes. An aspect of the present invention also provides a recording medium having recorded thereon a program to implement the method.

According to one aspect of the present invention, there is provided a frame transmitting method including obtaining an address of a mobile node that coordinates communications of a wireless local area network (LAN) in which a mobile station is located using an address of the mobile station and transmitting a frame destined to the mobile station over a network of mobile nodes including the mobile node using the obtained address of the mobile node.

According to another aspect of the present invention, there is provided a frame transmitting apparatus including an address obtaining unit that obtains an address of a mobile node that coordinates communications of a wireless LAN in which a mobile station is located using an address of the mobile station and a transmitting unit that transmits a frame destined to the mobile station over a network of mobile nodes including the mobile node using the address of the mobile node obtained by the address obtaining unit.

According to still another aspect of the present invention, there is provided a computer-readable recording medium having recorded thereon a program for implementing a frame transmitting method. The frame transmitting method includes obtaining an address of a mobile node that coordinates communications of a wireless LAN in which a mobile station is located using an address of the mobile station and transmitting a frame destined to the mobile station over a network of mobile nodes including the mobile node using the obtained address of the mobile node.

According to yet another aspect of the present invention, there is provided a frame relaying method including receiving a frame destined to a mobile station over a network of mobile nodes by referring to an address of a mobile node that coordinates communications of a wireless LAN in which the mobile station is located and transmitting the received frame over the network of the mobile nodes using the address of the mobile node.

According to yet another aspect of the present invention, there is provided a frame relaying apparatus including a receiving unit that receives a frame destined to a mobile station over a network of mobile nodes by referring to an address of a mobile node that coordinates communications of a wireless LAN in which the mobile station is located and a transmitting unit that transmits the received frame over the network of the mobile nodes using the address of the mobile node.

According to yet another aspect of the present invention, there is provided a computer-readable recording medium having recorded thereon a program for implementing a frame relaying method. The frame relaying method includes receiving a frame destined to a mobile station over a network of mobile nodes by referring to an address of a mobile node that coordinates communications of a wireless LAN in which the mobile station is located and transmitting the received frame over the network of the mobile nodes using the address of the mobile node.

According to yet another aspect of the present invention, there is provided a frame receiving method including receiving a frame destined to a mobile station over a network of mobile nodes by referring to an address of a mobile node that coordinates communications of a wireless LAN in which the mobile station is located and transmitting a wireless LAN frame converted from the received frame to the mobile station over the wireless LAN using an address of the mobile station.

According to yet another aspect of the present invention, there is provided a frame receiving apparatus including a receiving unit that receives a frame destined to a mobile station over a network of mobile nodes by referring to an address of a mobile node that coordinates communications of a wireless LAN in which the mobile station is located and a transmitting unit that transmits a wireless LAN frame converted from the received frame to the mobile station over the wireless LAN using an address of the mobile station.

According to yet another aspect of the present invention, there is provided a computer-readable recording medium having recorded thereon a program for implementing a frame receiving method. The frame receiving method includes receiving a frame destined to a mobile station over a network of mobile nodes by referring to an address of a mobile node that coordinates communications of a wireless LAN (local area network) in which the mobile station is located and transmitting a wireless LAN frame converted from the received frame to the mobile station over the wireless LAN using an address of the mobile station.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
Figure 1 illustrates a conventional wireless communication environment;
Figure 2 illustrates a wireless communication environment according to an embodiment of the present invention;
Figure 3 is a block diagram of a wireless mesh network frame transmitting apparatus according to an embodiment of the present invention;
Figure 4 illustrates in detail an extended service set (ESS) station table of Figure 3;
Figure 5 illustrates the format of a frame in a wireless mesh network according to an embodiment of the present invention;
Figure 6 is a block diagram of a wireless mesh network frame relaying apparatus according to an embodiment of the present invention;
Figure 7 is a block diagram of a wireless mesh network frame receiving apparatus according to an embodiment of the present invention;
Figure 8 illustrates examples of forwarding tables in the wireless communication environment of Figure 2;
Figure 9 is a flowchart illustrating a wireless mesh network frame transmitting method according to an embodiment of the present invention;
Figure 10 is a flowchart illustrating a wireless mesh network frame relaying method according to an embodiment of the present invention; and
Figure 11 is a flowchart illustrating a wireless mesh network frame receiving method according to an embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

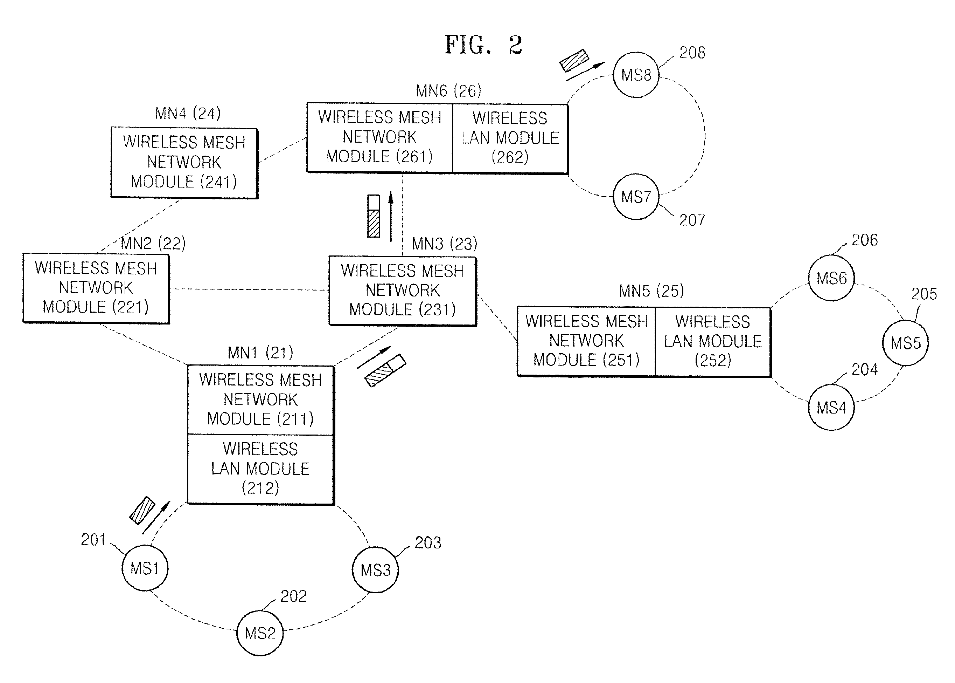

Figure 2 illustrates a wireless communication environment according to an embodiment of the present invention. As shown in Figure 2, the wireless communication environment includes mobile nodes (MN1 through MN6) 21 through 26 and mobile station (MS1 through MS8) 201 through 208. The MNs 21 through 26 are connected to one another to form a single network. Hereinafter, the network formed by the MNs 21 through 26 will be referred to as a wireless mesh network. Here, it is understood that mobile nodes may be referred to as wireless mesh points or other terms.

The MSs 201 through 203 are connected to the MN1 21 to form a base service set (BSS), the MSs 204 through 206 are connected to the MN5 25 to form another BSS, and the MSs 207 and 208 are connected to the MN6 26 to form still yet another BSS. In particular, a mobile node coordinates each BSS and a mobile station communicates with other mobile stations within each BSS by a relay of the mobile node.

Since mobile nodes of a wireless mesh network are connected with one another by a wireless multi-hop and, thus, may directly communicate with one another, the wireless mesh network may be self-organized by the mobile nodes without the relay of one of the mobile nodes.

It is understood that some of the mobile nodes of the wireless mesh network, e.g., the MNs 22 through 24, serve as a node of the wireless mesh network, and that some of the mobile nodes of the wireless mesh network, e.g., the MNs 21, 25, and 26, serve as both a node of the wireless mesh network and an access point that coordinates communications of a wireless local area network (LAN) thereof.

The MNs 22 through 24 that serve only as nodes of the wireless mesh network include only wireless mesh network modules 221, 231, and 241, respectively. On the other hand, the MNs 21, 25, and 26 that serve as both nodes and access points include wireless mesh network modules 211, 251, and 261 and wireless LAN modules 212, 252, and 262, respectively.

The wireless LAN modules 212, 252, and 262 are substantially entirely compatible with the IEEE 802.11 wireless LAN standard. In other words, the wireless LAN modules 212, 252, and 262 support operations that allow the MNs 21, 25, and 26 to serve as access points to coordinate communications of their wireless LANs according to the IEEE 802.11 wireless LAN standard. Thus, conventional mobile stations complying with the IEEE 802.11 wireless LAN standard may be applied to the current embodiment of the present invention without any change thereto.

For example, the MN1 21 authenticates the MSs 201 through 203 according to the IEEE 802.11 wireless LAN standard and associates with the MSs 201 through 203 that undergo the authentication. The MSs 201 through 203 that associate with the MN1 21 transmit a frame to a mobile station in another BSS. The MN1 21 that receives the frame transmits the received frame according to a distribution system (DS) to allow the frame to arrive at a final destination mobile station. Here, it is noted that it is understood that the above description holds for the MNs 25 and 26.

According to the IEEE 802.11 wireless LAN standard, the DS refers to a mechanism used when the MN1 21 exchanges frames with the MSs 201 through 203 and communicates with other mobile nodes to exchange frames with mobile stations within another BSS. In particular, the DS in the current embodiment of the invention includes a mechanism to exchange frames over a wireless mesh network.

However, an access point that coordinates mobile stations is connected as a static node with other access points in a wired manner through a portable module in the conventional IEEE 802.11 wireless LAN standard, but an access point that coordinates mobile stations is connected as a mobile node with other access points, i.e., other mobile nodes, in a wireless manner through a wireless mesh network in the current embodiment of the present invention. In particular, to support data transmission where an access point is connected as a mobile node with other access points in a wireless manner, a mechanism by which a frame is transmitted to a destination mobile station over a wireless mesh network by referring only to the address of a mobile node that coordinates communications of a BSS including the destination mobile station and without referring to the address of the destination mobile station is suggested. In other words, mobile nodes of a wireless mesh network do not consider the addresses of mobile stations when routing frames.

Since mobile stations often perform authentication and association with respect to other BSSs, mobile nodes of a wireless mesh network should retain the latest mobile station information in their forwarding tables at all times if they should consider the addresses of mobile stations when routing frames. Thus, the mobile station information in the forwarding tables of the mobile nodes should be regularly updated. This causes an increase of the time required for data frame forwarding and costs, i.e., wireless communication resources.

Thus, in the current embodiment of the present invention, the data transmission mechanism described above is adopted. Where an originating mobile station is the MS1 201 and a destination mobile station is the MS8 208, as is illustrated in Figure 2, will now be described. The MN1 21 encapsulates the address of the MS8 208 in a frame using the address of the MN6 26 that coordinates communications of a BSS including the MS8 208 and transmits the frame. The MN3 23 then routes the frame by referring to only the address of the MN6 26. The MN6 26 receives the frame, recognizes the address of the MS8 208 by decapsulation, and transmits the frame to the MS8 208 by referring to only the address of the MN6 26.

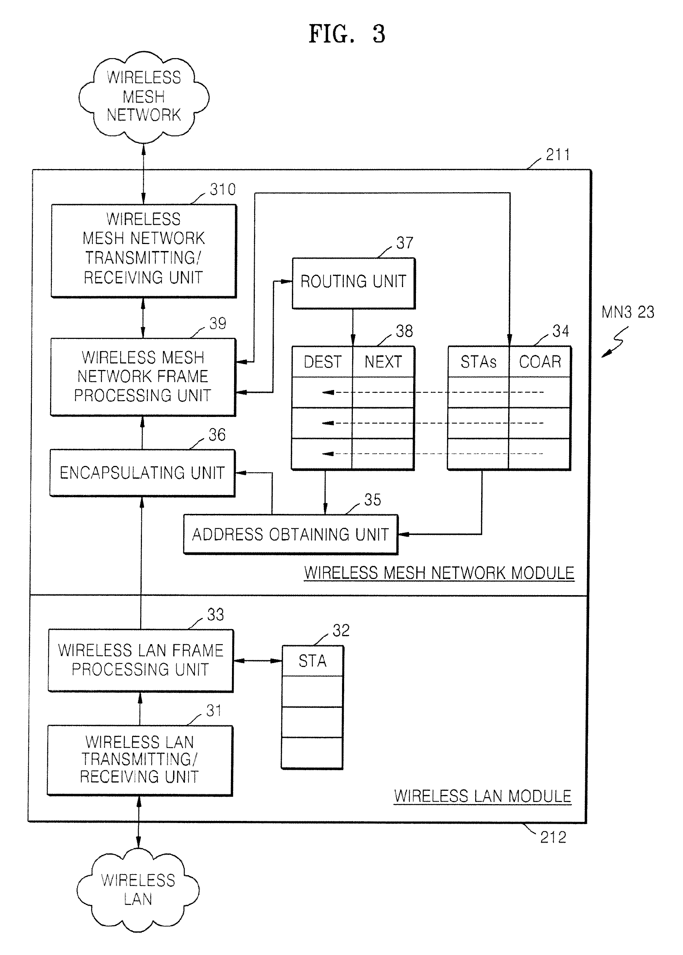

Figure 3 is a block diagram of a wireless mesh network frame transmitting apparatus according to an embodiment of the present invention. As shown in Figure 3, the wireless mesh network frame transmitting apparatus according to the current embodiment of the present invention is mounted in the MN1 21 and includes the wireless mesh network module 211 and the wireless LAN module 212. As is mentioned above, the wireless mesh module 211 allow the MN1 21 to serve as a node in a wireless mesh network and the wireless LAN module 212 has functions that allow the MN1 21 to serve as an access point that coordinates communications of its wireless LAN.

The wireless LAN module 212 includes a wireless LAN transmitting/receiving unit 31, a BSS station table 32, and a wireless LAN frame processing unit 33. The wireless LAN transmitting/receiving unit 31 receives a wireless LAN frame from and transmits the wireless LAN frame to coordinated mobile stations thereof, i.e., mobile stations 201 through 203. The BSS station table 32 stores information about the MSs 201 through 203 included in a BSS coordinated by the MN1 21. Media Access Control (MAC) addresses of the MSs 201 through 203 are representative examples of the information about the MSs 201 through 203. More specifically, the BSS station table 32 obtains the information about the MSs 201 through 203 from a frame related to authentication and association and stores the obtained information. The wireless LAN frame processing unit 33 analyzes the wireless LAN frame that is received via the wireless LAN frame transmitting/receiving unit 31 and either processes the wireless LAN frame or generates a wireless LAN frame to be transmitted by the wireless LNA transmitting/receiving unit 31 based on a result of the analysis. In particular, in the current embodiment of the present invention, the wireless LAN frame processing unit 33 analyzes the wireless LAN frame to recognize whether the wireless LAN frame that is received by the wireless LAN transmitting/receiving unit 31 is a frame related to authentication and association or a data frame including actual data and performs authentication and association based on a result of the analysis. In the current embodiment of the present invention, the wireless LAN frame processing unit 33 also generates a wireless LAN frame to be transmitted to a destination mobile station from the wireless LAN frame received by the wireless LAN frame transmitting/receiving unit 31 by referring to the information about the MSs 201 through 203 in the BSS station table 32.

The wireless mesh network module 211 includes an Extended Service Set (ESS) station table 34, an address obtaining unit 35, an encapsulating unit 36, a routing unit 37, a forwarding table 38, a wireless mesh network frame processing unit 39, and a wireless mesh network transmitting/receiving unit 310. The ESS station table 34 stores information about the MSs 201 through 208 that is included in an ESS that is a set of all the BSSs in the current embodiment of the present invention. More specifically, the ESS station table 33 collects the information about the MSs 201 through 208 from BSS station tables of mobile nodes that coordinate communications of the BSSs and stores the collected information.

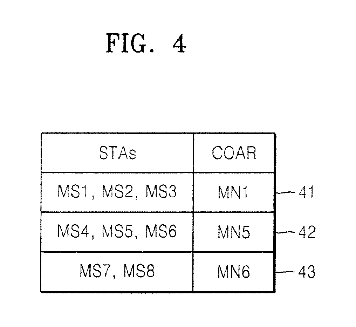

Figure 4 illustrates in detail the ESS station table 34 of Figure 3. As shown in Figure 4, the ESS station table 34 includes an entry 41 in which the MAC addresses of the MSs 201 through 203 are mapped to the MAC address of the MN1 21 to indicate that the MN1 21 coordinates the MSs 201 through 203. The ESS station table 34 also includes an entry 42 in which the MAC addresses of the MSs 204 through 206 are mapped to the MAC address of the MN5 25 to indicate that the MN5 25 coordinates the MSs 204 through 206.

The ESS station table 34 also includes an entry 43 in which the MAC addresses of the MSs 207 and 208 are mapped to the MAC address of the MN6 26 to indicate that the MN6 26 coordinates the MSs 207 and 208.

The address obtaining unit 35 obtains the MAC address of a mobile node that coordinates communications of a BSS including a destination mobile station from the MAC address of the destination mobile station, which is included in a wireless LAN frame that is generated by the wireless LAN frame processing unit 33, by referring to mapping between the MAC addresses of mobile stations and the MAC addresses of mobile nodes in the ESS station table 34. For example, when the destination mobile station is the MS8 208, the address obtaining unit 35 recognizes that the MAC address of the MS8 208 is mapped to the MAC address of the MN6 26 by referring to mapping between the MAC addresses of mobile stations and the MAC addresses of mobile nodes in the ESS station table 34.

The encapsulating unit 36 encapsulates the MAC address of a destination mobile station by adding the MAC address of a mobile node, obtained by the address obtaining unit 35, to the MAC address of the destination mobile station, included in a wireless LAN frame generated by the wireless LAN frame processing unit 33. For example, when the destination mobile station is the mobile station 208, the encapsulating unit 36 encapsulates the MAC address of the MS8 208 by adding the MAC address of the MN6 26, obtained by the address obtaining unit 35, to the MAC address of the MS8 208, included in a wireless LAN frame generated by the wireless LAN frame processing unit 33.

Thus, when a mobile node that receives a wireless mesh network frame transmits the wireless mesh network frame over a wireless mesh network, the MAC address of the MS8 208 encapsulated by the encapsulating unit 36 is not referred to by the mobile node. This mobile node may be one of the MNs 21 through 26. The MAC address of the MS8 208, which is encapsulated by the encapsulating unit 36, is referred to by the MN6 26 when a mobile node that receives a wireless mesh network frame transmits a wireless LAN frame converted from the wireless mesh network frame to a mobile station through a BSS.

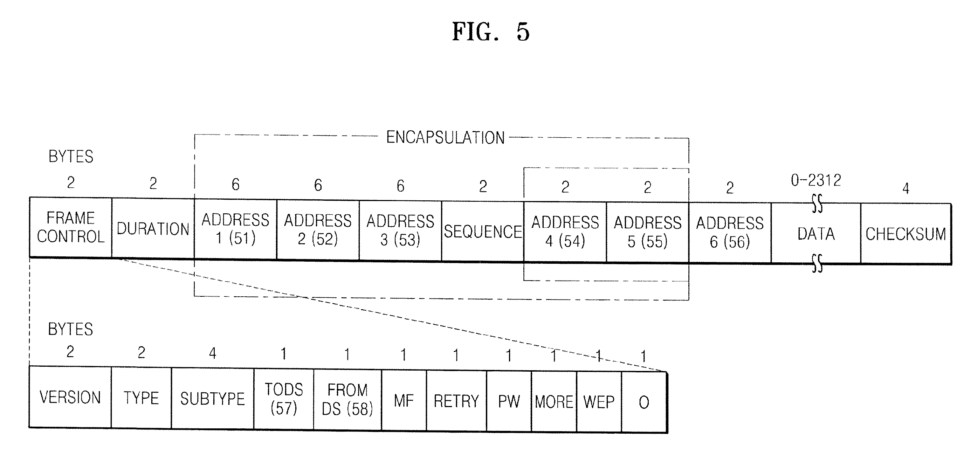

Figure 5 illustrates the format of a wireless mesh network frame according to an embodiment of the present invention. As shown in Figure 5, the wireless mesh network frame includes a frame control field, a duration field, an address 1 field 51, an address 2 field 52, an address 3 field 53, a sequence field, an address 4 field 54, an address 5 field 55, an address 6 field 56, a data field, and a checksum field.

In the address 1 field 51, the MAC address of a next hop is recorded. In the address 2 field 52, the MAC address of a current hop is recorded. In the address 3 field 53, the MAC address of a destination mobile node is recorded. In the address 4 field 54, the MAC address of an originating mobile node is recorded. In the address 5 field 55, the MAC address of a destination mobile station is recorded. In the address 6 field 56, the MAC address of an originating mobile station is recorded. In other words, by adding the address 1 field 51, the address 2 field 52, the address 3 field 53, and the address 4 field 54 to the address 5 field 55 and the address 6 field 56, the encapsulating unit 36 encapsulates the MAC address of a destination mobile station and the MAC address of an originating mobile station, which are included in a wireless LAN frame transmitted from the wireless LAN frame processing unit 33.

The frame control field includes a version field, a type field, a subtype field, a ToDS field 57, a FromDS field 58, a more frag (MF) field, a retry field, a PW field, a more data (MORE) field, a WEP field, and an order (0) field. According to embodiments of the invention, in a wireless mesh network frame received from a mobile station, a value of the ToDS field 57 is 1 and a value of the FromDS field 58 is 0, while, on the other hand, in a wireless mesh network frame to be transmitted to a mobile station, a value of the ToDS field 57 is 0 and a value of the FromDS field 58 is 1.

The routing unit 37 determines a next hop in a wireless mesh network according to a routing protocol. The routing protocol is used to select the optimal route from among various paths between an originator and a destination. Conventional representative routing protocols used in a third layer of a wired communication environment include a routing information protocol (RIP), an open shortest path first (OSPF), and a border gateway protocol (BGP).

The forwarding table 38 stores the MAC address of a destination mobile node and the MAC address of a mobile node corresponding to a next hop determined by the routing unit 37. In other words, the forwarding table 38 includes entries, in which the MAC address of a destination mobile node and the MAC address of a mobile node, corresponding to a next hop based on the optimal path to the destination mobile node, are mapped.

The wireless mesh frame processing unit 39 analyzes a wireless mesh network frame that is received by the wireless mesh network frame transmitting/receiving unit 310 and either processes the wireless mesh network frame or generates a wireless mesh network frame to be transmitted by the wireless mesh network transmitting/receiving unit 310 from the wireless LAN frame encapsulated by the encapsulating unit 36, according to a result of the analysis. In particular, in the current embodiment of the present invention, the wireless mesh network frame processing unit 39 generates a wireless mesh network frame to be transmitted to a mobile node corresponding to a next hop determined by the routing unit 37 from the wireless LAN frame encapsulated by the encapsulating unit 36 by referring to next hop information of the forwarding table 38.

The wireless mesh network transmitting/receiving unit 310 transmits a wireless mesh network frame generated by the wireless mesh network frame processing unit 39 to a mobile node corresponding to a next hop determined by the routing unit 37. In other words, the wireless mesh network transmitting/receiving unit 310 transmits a frame destined to a mobile station over a wireless mesh network by using the MAC address of a mobile node obtained by the address obtaining unit 35.

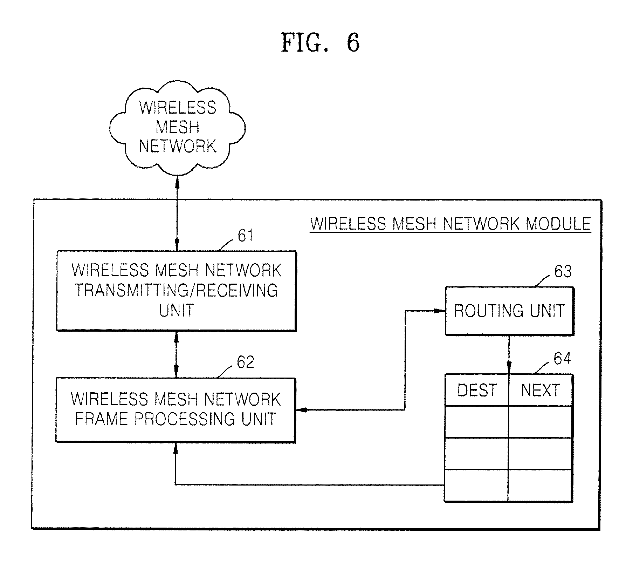

Figure 6 is a block diagram of a wireless mesh network frame relaying apparatus according to an embodiment of the present invention. As shown in Figure 6, the wireless mesh network frame relaying apparatus, according to the current embodiment of the present invention, is mounted in the MN3 23 and includes the wireless mesh network module 231. As is mentioned above, the wireless mesh network module 231 allows the MN3 23 to serve as a node in a wireless mesh network.

The wireless mesh network module 231 includes a wireless mesh network transmitting/receiving unit 61, a wireless mesh network frame processing unit 62, a routing unit 63, and a forwarding table 64. The wireless mesh network transmitting/receiving unit 61 receives a wireless mesh network frame that is destined to a mobile station over a wireless mesh network by referring to the MAC address of a mobile node that coordinates communications of a BSS including the mobile station. When a destination mobile station is the MS8 208, the wireless mesh network transmitting/receiving unit 61 receives a wireless mesh network frame destined to the MS8 208 over a wireless mesh network by referring to the MAC address of the MN6 26 that coordinates communications of a BSS including the MS8 208.

As is mentioned above, the MAC address of the MS8 208 is encapsulated using the MAC address of the MN6 26. Thus, the wireless mesh network transmitting/receiving unit 61 receives the wireless mesh network frame destined to the MS8 208 over the wireless mesh network without referring to the MAC address of the MS8 208. When the MN6 26 that receives the wireless mesh network frame transmits a wireless LAN frame converted from the wireless mesh network frame to the MS8 208 through the BSS, the MAC address of the MS8 208 is referred to by the MN6 26.

The wireless mesh network transmitting/receiving unit 61 also transmits a wireless mesh network frame generated by the wireless mesh network frame processing unit 62 to a mobile node corresponding to a next hop determined by the routing unit 63. In other words, the wireless mesh network transmitting/receiving unit 61 transmits a wireless mesh network frame destined to a mobile station over a wireless mesh network using the MAC address of a mobile node, which is included in its received wireless mesh network frame. For example, when a destination mobile station is the MS8 208, the wireless mesh network transmitting/receiving unit 61 transmits a wireless mesh network frame destined to the MS8 208 over a wireless mesh network using the MAC address of the MN6 26, which is included in its received wireless mesh network frame.

The wireless mesh network frame processing unit 62 analyzes the wireless mesh network frame that is received by the wireless mesh network transmitting/receiving unit 61 and either processes the received wireless mesh network frame or generates a wireless mesh network frame to be transmitted by the wireless mesh network transmitting/receiving unit 61, according to the result of analysis. In particular, in the current embodiment of the present invention, the wireless mesh network frame processing unit 62 recognizes that the wireless mesh network frame received by the wireless mesh network transmitting/receiving unit 61 is destined to another mobile node by referring to a forwarding table 64. The wireless mesh network frame processing unit 62 also generates a wireless mesh network frame to be transmitted by the wireless mesh network transmitting/receiving unit 61 by referring to next hop information of the forwarding table 64.

The routing unit 63 determines a next hop in the wireless mesh network according to a routing protocol.

The forwarding table 64 stores the MAC address of a destination mobile node and the MAC address of a mobile node corresponding to a next hop determined by the routing unit 63. In other words, the forwarding table 64 includes entries, each in which the MAC address of a destination mobile node and the MAC address of a mobile node corresponding to a next hope based on the optimal path to the destination mobile node are mapped.

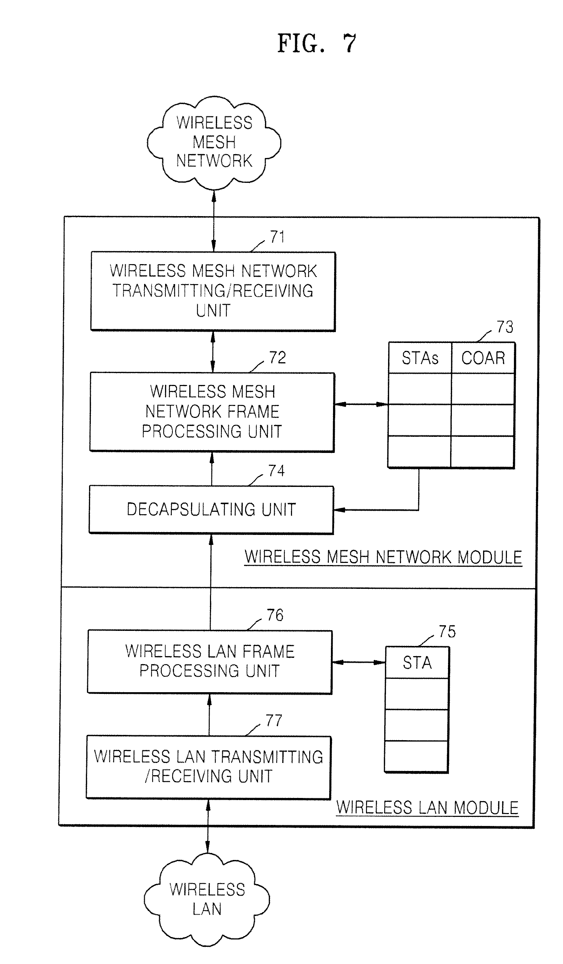

Figure 7 is a block diagram of a wireless mesh network frame receiving apparatus according to an embodiment of the present invention. As shown in Figure 7, the wireless mesh network frame receiving apparatus is mounted in the MN6 26 and includes the wireless mesh network module 261 and the wireless LAN module 262. As is mentioned above, the wireless mesh network module 261 allows the MN6 26 to serve as a node in a wireless mesh network and the wireless LAN module 262 allows the MN6 26 to serve as an access point that coordinates communications of a wireless LAN including the MN6 26.

The wireless mesh network module 261 includes a wireless mesh network transmitting/receiving unit 71, a wireless mesh network frame processing unit 72, an ESS station table 73, and a decapsulating unit 74. The wireless mesh network transmitting/receiving unit 71 receives a wireless mesh network frame destined to a mobile station over a wireless mesh network by referring to the MAC address of a mobile node that coordinates communications of a BSS including the mobile station. When a destination mobile station is the MS8 208, the wireless mesh network transmitting/receiving unit 71 receives a wireless mesh network frame destined to the MS8 208 over a wireless mesh network by referring to the MAC address of the MN6 26 that coordinates communications of a BSS including the MS8 208. Since the MAC address of the MS8 208 is encapsulated using the MAC address of the MN6 26, the wireless mesh network transmitting/receiving unit 71 receives the wireless mesh network frame over the wireless mesh network without referring to the encapsulated MAC address of the MS8 208.

The wireless mesh network frame processing unit 72 analyzes the wireless mesh network frame received by the wireless mesh network transmitting/receiving unit 71 and processes the wireless mesh network frame or generates a wireless mesh network frame to be transmitted by the wireless mesh network transmitting/receiving unit 71, according to a result of the analysis. In particular, in the current embodiment of the present invention, the wireless mesh network frame processing unit 72 recognizes that the wireless mesh network frame received by the wireless mesh network transmitting/receiving unit 71 arrives at a mobile node that coordinates a destination mobile station by referring to the ESS station table 73.

For example, when the destination mobile station is the MS8 208, the wireless mesh network frame processing unit 72 recognizes that the wireless mesh network frame received by the wireless mesh network transmitting/receiving unit 71 arrives at the MN6 26 that coordinates the destination MN8 208 by referring to an entry in which the MAC address of the MS7 207 and the MAC address of the MS8 208 are mapped to the MAC address of the MN6 206 from among entries of the ESS station table 73.

The ESS station table 73 stores information about the MSs 201 through 208 included in an ESS that is a set of all the BSSs in the current embodiment of the present invention. More specifically, the ESS station table 73 collects the information about the MSs 201 through 208 from BSS station tables of mobile nodes that coordinate communications of the BSSs and stores the collected information.

By removing the MAC address of a mobile node that coordinates a destination mobile station, which is added to the MAC address of the destination mobile station of a wireless mesh network frame that is recognized as arriving at the mobile node by the wireless mesh network frame processing unit 72, the decapsulating unit 74 decapsulates the MAC address of the destination mobile station.

For example, when the destination mobile station is the MS8 208, the decapsulating unit 74 decapsulates the MAC address of the MS8 208 by removing the MAC address of the MN6 26 that is added to the MAC address of the MS8 208 of a wireless mesh network frame that is recognized as arriving at the MN6 26 that coordinates the MS8 208 by the wireless mesh network frame processing unit 72. The MAC address of the MS8 208, having been decapsulated by the decapsulating unit 74, is referred to by the MN6 26 when the MS6 26 that receives the wireless mesh network frame transmits a wireless LAN frame converted from the wireless mesh network frame to the MS8 208 over a wireless LAN.

The wireless LAN module 262 includes a BSS station table 75, a wireless LAN frame processing unit 76, and a wireless LAN transmitting/receiving unit 77. The BSS station table 75 stores information about the MSs 207 and 208 included in a BSS managed by the MN6 26. MAC addresses of the MSs 207 and 208 are representative examples of the information about the MSs 207 and 208. More specifically, the BSS station table 75 obtains the information about the MSs 207 and 208 from a wireless LAN frame that is recognized as being related to authentication and association as a result of the analysis of the wireless LAN frame processing unit 76 and stores the obtained information.

The wireless LAN frame processing unit 76 analyzes the wireless LAN frame received by the wireless LAN frame transmitting/receiving unit 71 and either processes the wireless LAN frame or generates a wireless LAN frame to be transmitted by the wireless LAN transmitting/receiving unit 71 from the wireless mesh network frame decapsulated by the decapsulating unit 74, according to a result of the analysis. In particular, in the current embodiment of the present invention, the wireless LAN frame processing unit 76 generates a wireless LAN frame to be transmitted to the wireless LAN transmitting/receiving unit 71 from the wireless mesh network frame decapsulated by the decapsulating unit 74 using mobile station information of the BSS station table 75.

The wireless LAN transmitting/receiving unit 77 transmits a wireless LAN frame converted from the wireless mesh network frame received by the wireless mesh network transmitting/receiving unit 71, i.e., a wireless LAN frame generated by the wireless LAN frame processing unit 76, to a destination mobile station through a BSS using the MAC address of the destination mobile station.

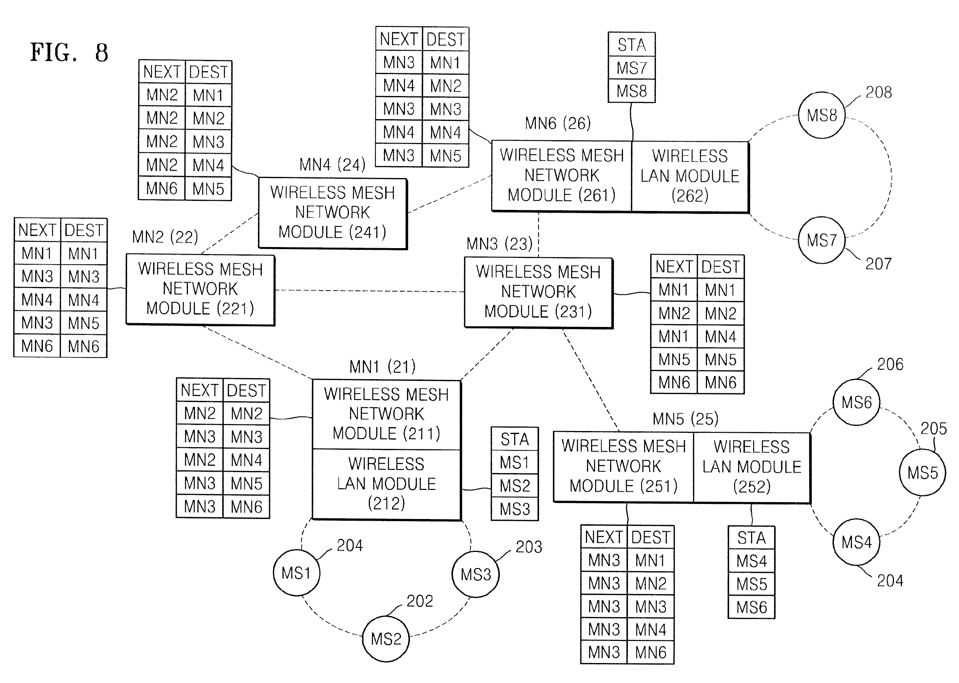

Figure 8 illustrates examples of forwarding tables in the wireless communication environment of Figure 2. As shown in Figure 8, each of the wireless mesh network modules 211, 221, 231, 241, 251, and 261 includes a forwarding table. Each of the wireless LAN modules 212, 252, and 262 includes a BSS station table and, although not illustrated in Figure 8, an ESS station table.

A case where the MS1 201 transmits a wireless LAN frame to the MS8 208 by referring to the forwarding tables illustrated in Figure 8 will now be described. Here, it is assumed that MAC addresses of a wireless mesh network frame (the address of a next hop, the address of a current hop, the address of a destination mobile node, and the address of an originating mobile node, or the address of a destination mobile station and the address of an originating mobile station) are expressed as shown in Figure 5.

First, the MN1 21 receives a wireless LAN frame including the address of a mobile node, the address of an originating mobile station, and the address of a destination mobile station according to the format of a ToDS wireless LAN frame of the IEEE 802.11 wireless LAN standard, i.e., the MAC addresses of the MN1, the MS1, and the MS3, from the MS1 201, generates a wireless mesh network frame including the MAC addresses of the MN3, the MN1, the MN6, and the MN1, or the MS8 and the MS1 from the received wireless LAN frame, and transmits the generated wireless mesh network frame over the wireless mesh network.

Next, the MAC addresses of the wireless mesh network frame (the MAC addresses of the MN3, the MN1, the MN6, and the MN1, or the MS8 and the MS1) are converted into the MAC addresses of the MN6, the MN3, the MN6, and the MN1, or the MS8 and the MS1 at the MN3 23 corresponding to a next hop.

The MN6 26 corresponding to a next hop receives a wireless mesh network frame including the MAC addresses of the MN6, the MN3, the MN6, and the MN1, or the MS8 and the MS1, generates a wireless LAN frame including the address of a destination mobile station, the address of a mobile node, and the address of an originating mobile station according to the format of a FromDS wireless LAN frame of the IEEE 802.11 wireless LAN standard, i.e., the MAC addresses of the MS8, the MN6, and the MS1, and transmits the generated wireless LAN frame through a wireless LAN.

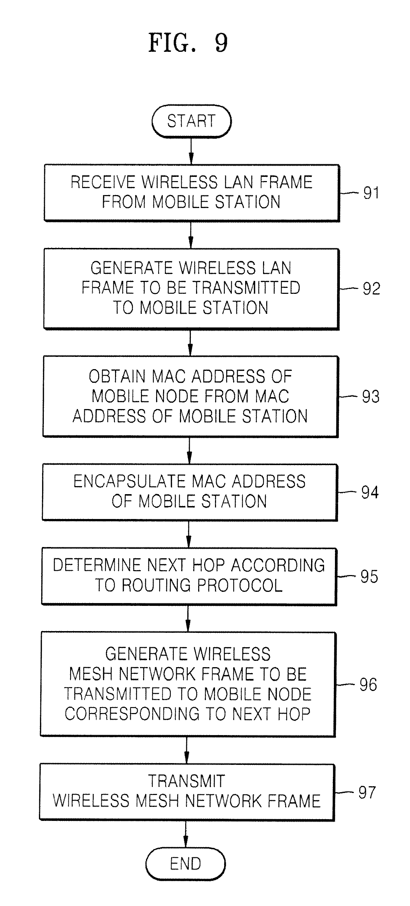

Figure 9 is a flowchart illustrating a wireless mesh network frame transmitting method according to an embodiment of the present invention. As shown in Figure 9, the wireless mesh network frame transmitting method, according to the current embodiment, includes operations undertaken by the wireless mesh network frame transmitting apparatus of Figure 3. Thus, the description made regarding the wireless mesh network frame transmitting apparatus of Figure 3 may be applied to the wireless mesh network frame transmitting method, according to the current embodiment of the present invention, though a detailed description of same is omitted.

In operation 91, the MN1 21 receives a wireless LAN frame from the coordinated MSs 201 through 203. In operation 92, the MN1 21 generates a wireless LAN frame to be transmitted to a destination mobile station from the received wireless LAN frame by referring to mobile station information of the BSS station table 32. In operation 93, the MN1 21 obtains the MAC address of a mobile node that coordinates communications of a BSS including the destination mobile station from the MAC address of the destination mobile station, included in the generated wireless LAN frame, by referring to mapping between the MAC addresses of mobile stations and the MAC addresses of mobile nodes in the ESS station table 34. In operation 94, the MN1 21 encapsulates the MAC address of the destination mobile station, included in the generated wireless LAN frame, by adding the obtained MAC address of the mobile node to the MAC address of the destination mobile address.

In operation 95, the MN1 21 determines a next hop in the wireless mesh network according to a routing protocol. In operation 96, the MN1 21 generates a wireless mesh network frame to be transmitted to a mobile node corresponding to the determined next hop from the encapsulated wireless LAN frame by referring to next hop information of the forwarding table 38. In operation 97, the MN1 21 transmits the generated wireless mesh network frame to the mobile node corresponding to the determined next hop.

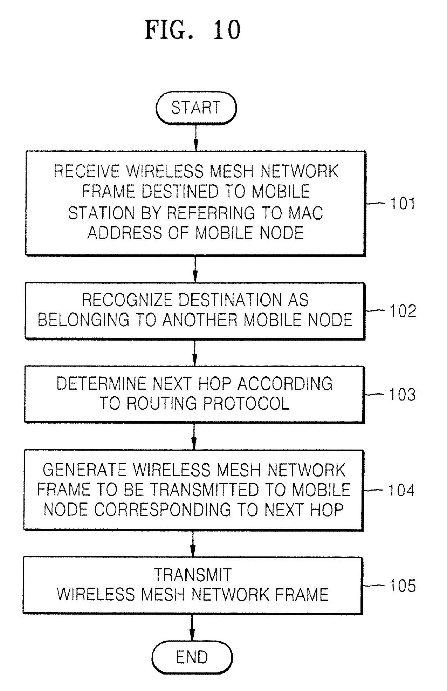

Figure 10 is a flowchart illustrating a wireless mesh network frame relaying method according to an embodiment of the present invention. As shown in FIG. 10, the wireless mesh network frame relaying method according to the current embodiment includes operations that are processed in time series by the wireless mesh network frame relaying apparatus of Figure 6. Thus, the description of the wireless mesh network frame relaying apparatus of Figure 6 will not be given again.

In operation 101, the MN3 23 receives a wireless mesh network frame destined to a mobile station over a wireless mesh network by referring to the MAC address of a mobile node that coordinates communications of a BSS including the mobile station. In operation 102, the MN3 23 recognizes that the destination of the received wireless mesh network frame is another mobile node by referring to the forwarding table 64.

In operation 103, the MN3 23 determines a next hop in the wireless mesh network according to a routing protocol. In operation 104, the MN3 23 generates a wireless mesh network frame to be transmitted to a mobile node corresponding to the determined next hop by referring to next hop information of the forwarding table 64. In operation 105, the MN3 23 transmits the generated wireless mesh network frame to the mobile node corresponding to the determined next hop.

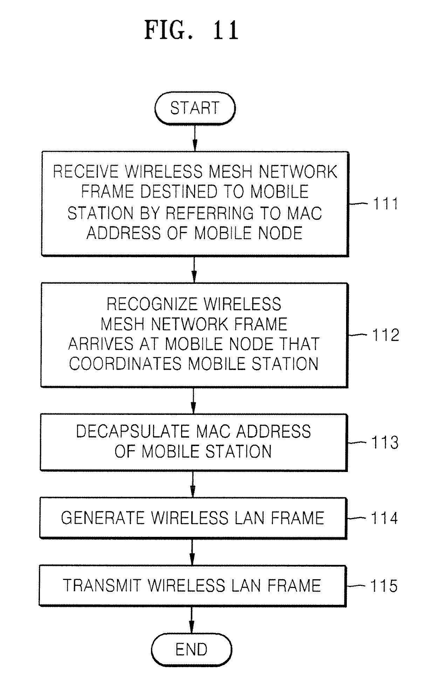

Figure 11 is a flowchart illustrating a wireless mesh network frame receiving method according to an embodiment of the present invention. As shown in Figure 11, the wireless mesh network frame receiving method according to the current embodiment includes operations that are processed in time series by the wireless mesh network frame receiving apparatus of Figure 7. Thus, the description of the wireless mesh network frame receiving apparatus of Figure 7 will not be given again.

In operation 111, the MN6 26 receives a wireless mesh network frame destined to a mobile station over a wireless mesh network by referring to the MAC address of a mobile node that coordinates communications of a BSS including the mobile station. In operation 112, the MN6 26 recognizes that the received wireless mesh network frame arrives at the destination mobile station by referring to the ESS station table 73. In operation 113, the MN6 26 decapsulates the MAC address of the destination mobile station by removing the MAC address of the mobile node added to the MAC address of the destination mobile station of the wireless mesh network frame that is recognized as arriving at the mobile node that coordinates the destination mobile station. In operation 114, the MN6 26 generates a wireless LAN frame to be transmitted by the wireless LAN transmitting/receiving unit 71 from the decapsulated wireless mesh network frame using mobile station information of the BSS station table 75. In operation 115, the MN6 26 transmits the generated wireless LAN frame to the destination mobile station through the BSS using the MAC address of the destination mobile station.

As is described above, according to aspects of the present invention, a mechanism is capable of supporting data transmission where access points are connected as mobile nodes with one another in a wireless manner. In particular, the mechanism allows for frame transmission over a wireless mesh network by reference to only the address of a mobile node that coordinates communications of a BSS including a destination mobile station, thereby reducing the time required for data frame forwarding and costs, e.g., wireless communication resources and efficiently supporting data transmission.

Furthermore, according to aspects of the present invention, since a wireless LAN module of a mobile node is completely compatible with the IEEE 802.11 wireless LAN standard, the present invention may be applied to conventional mobile stations complying with the IEEE 802.11 wireless LAN standard, thereby avoiding a cost increase caused by a change of the mobile stations. Moreover, the present invention may also be applied to wireless mesh network nodes including only wireless mesh network modules.

Meanwhile, according to aspects of the present invention, the embodiments of the methods of the present invention may be embodied as computer programs on recording media and executed on general-purpose digital computers. In addition, a data structure used in the present invention can be recorded on a computer-readable recording medium by various means. Examples of the recording media include magnetic storage media such as read-only memory (ROM), floppy disks, and hard disks, optical data storage devices such as CD-ROMs and digital versatile discs (DVD), and carrier waves such as transmission over the Internet.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A frame transmitting method, comprising:
obtaining an address of a mobile node (26) that coordinates communications of a wireless local area network (LAN) in which a mobile station (207) is located using an address of the mobile station (207); and
transmitting a frame destined to the mobile station (207) over a network of mobile nodes (21-26) including the mobile node (26) using the obtained address of the mobile node (26).

2. The frame transmitting method of claim 1, wherein the address of the mobile station (207) is referred to by the mobile node (26) if the mobile node (26) transmits a wireless LAN frame converted from the frame to the mobile station (207) over the wireless LAN.

3. The frame transmitting method of claim 1 or 2, further comprising encapsulating the address of the mobile station (207) by adding the address of the mobile node (26) to the address of the mobile station (207), wherein the encapsulated address of the mobile station (207) is not referred to by the mobile node (26) that receives the frame if the mobile node (26) that receives the frame transmits the frame over the network of the mobile nodes (21-26).

4. The frame transmitting method of claim 1 2 or 3, further comprising determining a next hop in the network of the mobile nodes (21-26) according to a predetermined routing protocol, wherein the transmitting comprises transmitting the frame to the determined next hop.

5. The frame transmitting method of claim 1, 2, 3 or 4, wherein some of the mobile nodes serve only as nodes in the network of the mobile nodes (21-26) and other mobile nodes serve as both nodes in the network of the mobile nodes (21-26) and access points to coordinate communications of wireless LANs including the wireless LAN.

6. A frame transmitting apparatus (21), comprising:
an address obtaining unit (35) to obtain an address of a mobile node (26) that coordinates communications of a wireless local area network (LAN) in which a mobile station (207) is located using an address of the mobile station (207); and
a transmitting unit (310) to transmit a frame destined to the mobile station (207) over a network of mobile nodes (21-26) including the mobile node (26) using the address of the mobile node (26) obtained by the address obtaining unit (35).

7. A computer-readable recording medium having recorded thereon a program to execute a frame transmitting method, wherein the frame transmitting method comprises:
obtaining an address of a mobile node (26) that coordinates communications of a wireless local area network (LAN) in which a mobile station (207) is located using an address of the mobile station (207); and
transmitting a frame destined to the mobile station (207) over a network of mobile nodes (21-26) including the mobile node (26) using the obtained address of the mobile node (26).

8. A frame relaying method, comprising:
receiving a frame destined to a mobile station (207) over a network of mobile nodes (21-26) by referring to an address of a mobile node (26) that coordinates communications of a wireless local area network (LAN) in which the mobile station (207) is located; and
transmitting the received frame over the network of the mobile nodes (21-26) using the address of the mobile node (26).

9. The frame relaying method of claim 8, wherein an address of the mobile station (207) is referred to by the mobile node (26) if the mobile node (26) transmits a wireless LAN frame converted from the frame to the mobile station (207) over the wireless LAN.

10. The frame relaying method of claim 8 or 9, wherein the address of the mobile station (207) is encapsulated using the address of the mobile node (26) and the receiving comprises receiving the frame over the network of the mobile nodes (21-26) without referring to the encapsulated address of the mobile station (207).

11. The frame relaying method of claim 8, 9, or 10, further comprising determining a next hop in the network of the mobile nodes (21-26) according to a predetermined routing protocol, wherein the transmitting comprises transmitting the frame to the determined next hop.

12. The frame relaying method of claim 8, 9, 10 or 11, wherein some of the mobile nodes serve only as nodes in the network of the mobile nodes (21-26) and other mobile nodes serve as both nodes in the network of the mobile nodes (21-26) and access points to coordinate communications of wireless LANs including the wireless LAN.

13. A frame relaying apparatus (23), comprising:
a receiving unit (61) receiving a frame destined to a mobile station (207) over a network of mobile nodes (21-26) by referring to an address of a mobile node (26) that coordinates communications of a wireless local area network (LAN) in which the mobile station (207) is located; and
a transmitting unit (61) transmitting the received frame over the network of the mobile nodes (21-26) using the address of the mobile node (26).

14. A computer-readable recording medium having recorded thereon a program to execute a frame relaying method, wherein the frame relaying method comprises:
receiving a frame destined to a mobile station (207) over a network of mobile nodes (21-26) by referring to an address of a mobile node (26) that coordinates communications of a wireless local area network (LAN ) in which the mobile station (207) is located; and
transmitting the received frame over the network of the mobile nodes (21-26) using the address of the mobile node (26).

15. A frame receiving method, comprising:
receiving a frame destined to a mobile station (207) over a network of mobile nodes (21-26) by referring to an address of a mobile node (26) that coordinates communications of a wireless LAN in which the mobile station (207) is located; and
transmitting a wireless LAN frame converted from the received frame to the mobile station (207) over the wireless LAN using an address of the mobile station (207).

16. The frame receiving method of claim 15, wherein the address of the mobile station (207) is encapsulated using the address of the mobile node (26) and the receiving step comprises receiving the frame over the network of the mobile stations without referring to the encapsulated address of the mobile station (207).

17. The frame receiving method of claim 15 or 16, further comprising decapsulating the address of the mobile station (207) by removing the address of the mobile node (26) added to the address of the mobile station (207), wherein the decapsulated address of the mobile station (207) is referred to by the mobile node (26) if the mobile node (26) that receives the frame transmits the wireless LAN frame converted from the received frame to the mobile station (207) over the wireless LAN.

18. The frame receiving method of claim 15, 16 or 17, wherein some of the mobile nodes serve only as nodes in the network of the mobile nodes and other ones of the mobile nodes serve as both nodes in the network of the mobile nodes and access points to coordinate communications of wireless LANs including the wireless LAN.

19. A frame receiving apparatus (26) comprising:
a receiving unit (71) receiving a frame destined to a mobile station (207) over a network of mobile nodes (21-26) by referring to an address of a mobile node (26) that coordinates communications of a wireless local area network (LAN) in which the mobile station (207) is located; and
a transmitting unit (71) transmitting a wireless LAN frame converted from the received frame to the mobile station (207) over the wireless LAN using an address of the mobile station (207).

20. A computer-readable recording medium having recorded thereon a program for implementing a frame receiving method, wherein the frame receiving method comprises:
receiving a frame destined to a mobile station (207) over a network of mobile nodes (21-26) by referring to an address of a mobile node (26) that coordinates communications of a wireless local area network (LAN) in which the mobile station (207) is located; and
transmitting a wireless LAN frame converted from the received frame to the mobile station (207) over the wireless LAN using an address of the mobile station (207).

21. A wireless mesh network frame transmitting method for use in a wireless network, comprising:
receiving a wireless local area network (LAN) frame from a first mobile station (201) connected to the network;
generating a wireless LAN frame to be transmitted to a second mobile station (207) from the received wireless LAN frame;
obtaining a media access control (MAC) address of a mobile node (26) from a MAC address of the second mobile station (207);
encapsulating the MAC address of the second mobile station (207);
determining a next hop according to a routing protocol and generating the wireless mesh network frame to be transmitted to a mobile node (26) corresponding to the next hop; and
transmitting the wireless mesh network frame.

22. A wireless mesh network frame transmitting method for use in a wireless network, comprising:
receiving a wireless mesh network frame destined for a mobile station (207) within the network by referring to a media access code (MAC) address of a mobile node (26) within the network contained in the frame;
recognizing the destination mobile station (26) as belonging to another mobile node (26);
determining a next hop according to a routing protocol;
generating a wireless mesh network frame to be transmitted to a mobile node corresponding to the next hop; and
transmitting the wireless mesh network frame.

23. A wireless mesh network frame transmitting method for use in a wireless network, comprising:
receiving a wireless mesh network frame destined for a mobile station (207) within the network by referring to a media access code (MAC) address of a mobile node (26) within the network contained in the frame;
recognizing the destination mobile station (26) as belonging to the mobile node (26);
decapsulating a MAC address of the mobile station (207);
generating a wireless mesh network frame to be transmitted to the destination mobile station (26); and
transmitting the wireless mesh network frame to the destination mobile station (26).

24. A frame transmission mechanism for use with a wireless network, comprising;
a first mobile station (207) connected to the wireless network having a first media access control (MAC) address associated thereto, the first mobile station (207) acting as an originating station;
a first mobile node (26) connected to the network having a second MAC address associated thereto, the mobile node (26) coordinating the communications of mobile stations within a basic service set (BSS) thereof; and
a second mobile station (208) connected to the wireless network having a third MAC address associated thereto, the second mobile station (208) being within the BSS of the mobile node (26), wherein the originating mobile station (207) encapsulates the third MAC address in the frame using the second MAC address and subsequently transmits the frame.

25. The frame transmission mechanism according to claim 24, further comprising a second mobile node (26) to route the frame from the first mobile station (207) to the first mobile node (26) by referring to only the second MAC address.

26. The frame transmission mechanism according to claim 24 or 25, wherein the first mobile node (26) receives the frame, recognizes the third MAC address by decapsulation, and transmits the frame to the second mobile station (208) by referring to only the second MAC address.

27. An apparatus to support data transmission where access points of a wireless mesh network are connected as mobile nodes with one another in a wireless manner, the apparatus comprising a mechanism to allow for frame transmission over the wireless mesh network by reference to only an address of a mobile node (26) that coordinates communications of a basic service set (BSS) within the network including a destination mobile station (26).
